# EUROPÄISCHE PATENTANMELDUNG

(11) **EP 2 433 730 A1**
(43) Veröffentlichungstag der Anmeldung: **28.03.2012**
(21) Anmeldenummer: 10010340.7
(22) Anmeldetag: 23.09.2010
(51) Int. Cl.: B23C 5/10, B23G 5/18

(54) **Vorrichtung zum Fräsen eines Profils sowie Fräswerkzeug für eine solche Vorrichtung**

(71) Anmelder: Johs. Boss GmbH & Co. KG, 72461 Albstadt-Onstmettingen (DE)
(72) Erfinder: Conzelmann, Eric, 72479 Strassberg (DE)
(74) Vertreter: Leinweber & Zimmermann

(57) **Zusammenfassung**

Vorrichtung zum Fräsen eines Profils, insbesondere eines Gewindes, mit mindestens einem Fräswerkzeug (12,14,16) und mindestens einem Halter (10) zum Halten des Fräswerkzeugs.
Es ist vorgesehen, daß das Fräswerkzeug n (n ≥ 3) Arbeitsbereiche (24,26,28,30) aufweist und in n verschiedenen Betriebsstellungen von dem Halter gehalten werden kann, wobei in jeder Betriebsstellung ein anderer Arbeitsbereich in einer Arbeitsstellung liegt.
Darüber hinaus gibt es auch ein Fräswerkzeug einer solchen Vorrichtung.

## Beschreibung

Die Erfindung betrifft eine Vorrichtung zum Fräsen eines Profils, insbesondere eines Gewindes, mit mindestens einem Fräswerkzeug und mindestens einem Halter zum Halten des Fräswerkzeugs.

Vorrichtungen der oben genannten Art sind bekannt. Dabei weist das Fräswerkzeug einen oder zwei Arbeitsbereiche auf. Im Falle von zwei Arbeitsbereichen kann dann, wenn einer der Arbeitsbereiche abgenutzt ist, das Fräswerkzeug verstellt werden, so daß der andere (noch nicht abgenutzte) Arbeitsbereich benutzt wird. Dadurch ist ein Auswechseln des Fräswerkzeugs nach Abnutzung eines ersten Arbeitsbereichs nicht erforderlich. Sind jedoch beide Arbeitsbereiche abgenutzt, muß das Fräswerkzeug ersetzt werden.

Der Erfindung liegt die Aufgabe zugrunde, die Vorrichtung der eingangs genannten Art derart weiterzubilden, daß das Fräswerkzeug weniger häufig ausgetauscht werden muß.

Erfindungsgemäß wird die obige Aufgabe dadurch gelöst, daß das Fräswerkzeug n (n ≥ 3) Arbeitsbereiche aufweist und in n verschiedenen Betriebsstellungen von dem Halter gehalten werden kann, wobei in jeder Betriebsstellung ein anderer Arbeitsbereich in einer Arbeitsstellung liegt.

Mit anderen Worten wird das Fräswerkzeug, das herkömmlich nur zwei Arbeitsbereiche aufweist, mit drei oder mehr, insbesondere vier Arbeitsbereichen versehen. Gleichzeitig wird aber dafür gesorgt, daß immer nur einer der genannten Arbeitsbereiche genutzt wird, wohingegen die anderen Arbeitsbereiche in Reserve gehalten werden. Gegenüber einem Fräswerkzeug mit nur zwei Arbeitsbereichen hat das Fräswerkzeug mit drei oder vier Arbeitsbereichen eine um 50 bzw. 100 % erhöhte Standzeit, bis es ausgetauscht und/oder aufgearbeitet werden muß.

Erfindungsgemäß bevorzugt liegen die n Arbeitsbereiche in einer Projektion entlang einer Längsachse des Fräswerkzeugs in den Ecken eines n-Ecks.

Unter Projektion ist in diesem Falle nicht etwa zu verstehen, daß in einer Ansicht entlang der Längsachse alle n Arbeitsbereiche sichtbar sein müssen. Vielmehr ist lediglich mit der Projektion ausgesagt, daß sie dann, wenn sie in eine Ebene quer, insbesondere senkrecht, zur Längsachse verlegt werden, in den Ecken eines n-Ecks liegen. Durch diese Ausgestaltung muß zum Verstellen von einer Betriebsstellung in die andere, also zum Wechseln des Arbeitsbereichs ein und desselben Fräswerkzeugs auf keinen Fall mehr erfolgen, als ein Verdrehen um eine Achse des Fräswerkzeugs.

Das Fräswerkzeug ist erfindungsgemäß weiter bevorzugt einstückig.

Nach einer besonders bevorzugten Ausführungsform ist vorgesehen, daß
das Verstellen von einer ersten in eine zweite Betriebsstellung ein Verdrehen des Fräswerkzeugs um eine erste Achse enthält,
das Verstellen von der zweiten in eine dritte Betriebsstellung ein Verdrehen des Fräswerkzeugs um eine auf der ersten Achse senkrecht stehende zweite Achse enthält,
das Verstellen von der dritten in eine vierte Betriebsstellung ein Verdrehen des Fräswerkzeugs um die erste Achse enthält und
ein Verstellen von der vierten in die erste Betriebsstellung ein Verdrehen des Fräswerkzeugs um die zweite Achse enthält.

Wie bereits oben erwähnt, muß nur um eine oder zwei Achsen gedreht werden, um mit einem (noch nicht abgenutzten) Arbeitsbereich zu arbeiten, nachdem ein anderer Arbeitsbereich bereits abgenutzt ist. Dadurch ist die Gesamtvorrichtung besonders einfach handhabbar.

Bei herkömmlichen gattungsgemäßen Fräsvorrichtungen ist das Fräswerkzeug meist mittels einer Schraube gehalten, die sich durch eine Durchgangsöffnung des Fräswerkzeugs erstreckt. Diese Durchgangsöffnung schwächt das Fräswerkzeug und macht es weniger stabil. Darüber hinaus ist es zum Verstellen des Fräswerkzeugs erforderlich, die Schraube komplett zu lösen.

Angesichts der obigen Problematik ist es erfindungsgemäß besonders bevorzugt vorgesehen, daß der Halter ein Klemmhalter ist.

Es wird ausdrücklich darauf hingewiesen, daß das Vorsehen eines Klemmhalters sowie die im folgenden beschriebenen Einzelheiten der Klemmhalterung unabhängig davon verwirklicht werden können, ob das Fräswerkzeug (wie herkömmlich) nur zwei oder aber drei oder mehr Arbeitsbereiche aufweist.

Erfindungsgemäß weiter bevorzugt ist eine Schraube zum Erzeugen der Klemmkraft vorgesehen.

Diese Ausgestaltung ermöglicht ein Verstellen sowie ein Auswechseln des Fräswerkzeugs durch bloßes Lösen der Klemme, ohne daß es eines kompletten Herausschraubens der Schraube bedürfte. Dadurch wird die Handhabung weiter vereinfacht.

Erfindungsgemäß weiter bevorzugt ist ein zu der Schraube passendes geschlitztes Gewinde vorgesehen, das sich ansprechend auf das Einschrauben der Schraube aufweitet, um das Fräswerkzeug einzuklemmen.

Diese Lösung ist sowohl konstruktiv als auch von der Handhabung her besonders einfach.

Der Klemmbereich erstreckt sich nach einer besonders bevorzugten Ausführungsform der Erfindung über die gesamte Länge des Fräswerkzeugs.

Diese Ausgestaltung schützt den- oder diejenigen Arbeitsbereich(e), der/die gerade nicht verwendet wird/werden, weil er/sie von dem gerade verwendeten Arbeitsbereich her gesehen hinter dem Klemmbereich liegt/liegen.

Erfindungsgemäß weiter bevorzugt liegt der Klemmbereich in demselben Axialabschnitt des Fräswerkzeugs wie derjenige Arbeitsbereich, der in der Arbeitsstellung ist.

Diese Ausgestaltung ermöglicht es, die Klemmeinrichtung dazu zu verwenden, die auf das Fräswerkzeug wirkende Torsionskraft aufzunehmen bzw. zu verringern.

Nach einer besonders bevorzugten Ausführungsform der Erfindung ist vorgesehen, daß der Halter das Fräswerkzeug mittels Formschlusses hält.

Diese Lösung ist unabhängig von der oben beschriebenen Klemmhalterung. Die Kombination der Klemmhalterung mit der Formschluß-Halterung ist aber besonders wirkungsvoll, so daß das Fräswerkzeug äußerst verläßlich in Position gehalten wird.

Dem Formschlusse dient/dienen erfindungsgemäß weiter bevorzugt eine, zwei oder mehr Profilierung(en), die sich parallel zu der Längsachse des Fräswerkzeugs erstreckt/erstrecken.

Die Flanken der Profilierung dienen bei dieser Lösung als Widerlager gegen Kräfte, die das Fräswerkzeug aus der Arbeitsstellung zu verstellen drohen. Sie tragen daher zu einer besonders verläßlichen Halterung des Fräswerkzeugs bei.

Neben der oben beschriebenen Vorrichtung schafft die Erfindung auch ein Fräswerkzeug einer solchen Vorrichtung.

Im folgenden ist die Erfindung anhand eines bevorzugten Ausführungsbeispiels unter Bezugnahme auf die beiliegende Zeichnung mit weiteren Einzelheiten näher erläutert.

Dabei zeigen
- Figur 1: eine schematische Ansicht eines bevorzugten Ausführungsbeispiels der erfindungsgemäßen Fräsvorrichtung,
- Figur 2: eine Explosionsdarstellung der Vorrichtung nach Figur 1,

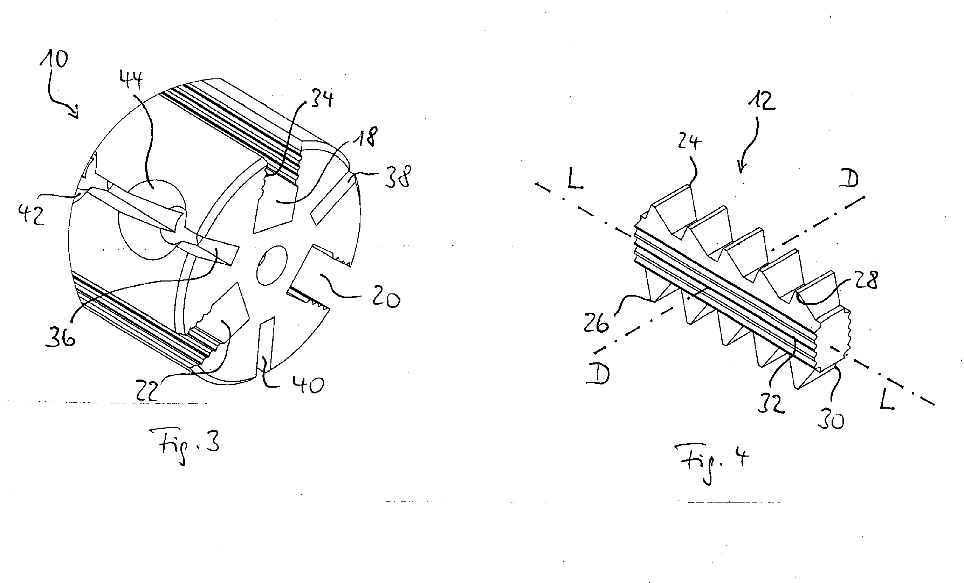

- Figur 3: die Einzelheit A in Figur 2, in vergrößertem Maßstabe, und
- Figur 4: eine Darstellung eines Fräswerkzeugs der Fräsvorrichtung nach Figur 1.

Zu der in der Zeichnung dargestellten Fräsvorrichtung gehört ein Halter 10, der drei Fräswerkzeuge 12, 14, 16 hält. Dazu werden die Fräswerkzeuge 12, 14, 16 in eine Ausnehmung 18, 20 bzw. 22 eingeschoben.

Die Erfindung ist nicht auf Ausführungsformen mit drei Fräswerkzeugen in einem Halter beschränkt. Vielmehr können es auch mehr oder weniger Fräswerkzeuge sein.

In dem in der Zeichnung dargestellten Ausführungsbeispiel sind alle Fräswerkzeuge gleich. Die folgenden Erläuterungen beziehen sich daher ausschließlich auf das Fräswerkzeug 12, gelten aber auch für die Fräswerkzeuge 14 und 16.

Das Fräswerkzeug 12 ist länglich. Seine Längsachse ist mit L bezeichnet. Eine zu der Längsachse L senkrecht liegende Verdrehachse ist mit D bezeichnet. Vier Arbeitsbereiche des Fräswerkzeugs 12 tragen die Bezugszahlen 24, 26, 28 bzw. 30. Auf zwei parallel zu der Längsachse L liegenden Seiten trägt das Fräswerkzeug 12 Profilierungen, von denen beispielhaft eine mit der Bezugszahl 32 bezeichnet ist. Der Halter 10 ist auf den Seitenwänden der Ausnehmung 18 mit zu der Profilierung des Fräswerkzeugs 12 passenden Profilierungen versehen, von denen wiederum eine beispielhaft mit der Bezugszahl 34 bezeichnet ist.

Zwischen jeweils zweien der Ausnehmungen 18, 20 und 22 ist der Halter 10 jeweils mit einem Schlitz 36, 38, 40 versehen, die wiederum alle gleich ausgestaltet sind, weshalb im folgenden nur der Schlitz 36 beschrieben ist.

Der Schlitz 36 ist mit zwei Öffnungen 42, 44 versehen, deren Wände zu Schrauben 46, 48 passende Gewinde tragen. Werden die Schrauben 46, 48 eingeschraubt, so wird der Schlitz 36 erweitert, was zu einem Einklemmen des Fräswerkzeugs 12 in der Ausnehmung 18 und des Fräswerkzeugs 16 in der Ausnehmung 22 führt.

Die Ausnehmung 18 ist an ihrem inneren Ende mit einem Anschlag 50 versehen, an dem das Fräswerkzeug 12 anschlägt.

Der Betrieb der in der Zeichnung dargestellten Vorrichtung ist im folgenden unter Bezugnahme auf das Fräswerkzeug 12 beschrieben.

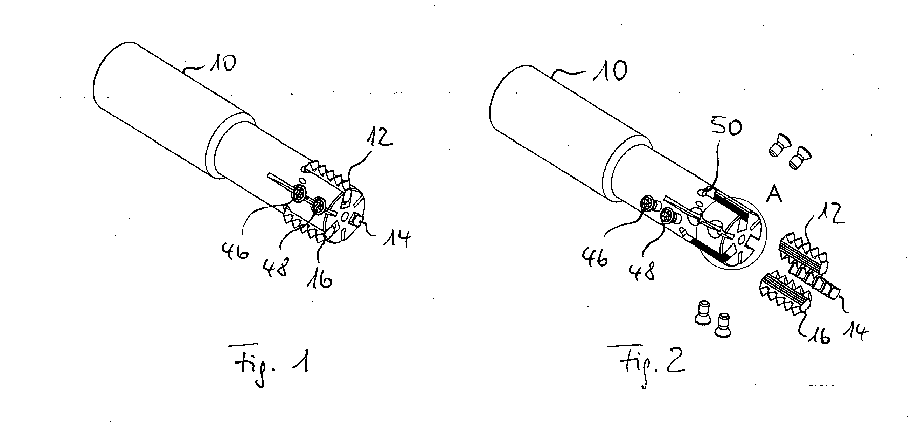

Es sei angenommen, in dem Betriebszustand nach Figur 1 werde der Arbeitsbereich 28 beim Fräsen verwendet. In dem in Figur 1 dargestellten Betriebszustand ist das Fräswerkzeug 12 zum einen durch die mittels der Schrauben 46 und 48 aufgebrachte Klemmkraft und zum anderen formschlüssig mittels der Profilierungen 32 und 34 in der Ausnehmung 18 gehalten. Insbesondere die Arbeitsbereiche 26 und 30 sind vor Beeinträchtigungen sicher innerhalb der Ausnehmung 18 angeordnet.

Ist der Arbeitsbereich 28 abgenutzt, so kann nach Lösen der Schrauben 46 und 48, die dazu nicht komplett herausgedreht werden müssen, das Fräswerkzeug 12 aus der Ausnehmung 18 herausgeschoben, um 180° um die Längsachse L gedreht, wieder eingeschoben und durch Wiederfestziehen der Schrauben 46 und 48 fixiert werden. In dieser Stellung wird der Arbeitsbereich 30 zum Fräsen verwendet.

Ist auch der Arbeitsbereich 30 abgenutzt, kann das Fräswerkzeug 12 wiederum entnommen und nach Verdrehen um jeweils 180° um die Achsen D und L wieder eingesetzt werden. In dieser Betriebsstellung dient dann der Arbeitsbereich 26 dem Fräsen.

Ein weiteres Drehen um 180° um die Längsachse L führt zu einer Benutzung des Arbeitsbereichs 24.

Sowohl die Klemmhalterung als auch die Profilierung erstrecken sich über die gesamte axiale Länge des Fräswerkzeugs 12, weshalb beim Fräsen auf das Fräswerkzeug 12 einwirkende Kräfte in besonders günstiger Weise und vollständig aufgenommen werden können.

Der Betriebswechsel von einem Arbeitsbereich zum anderen ist besonders einfach, weil nur die die Klemmung erzeugenden Schrauben 46 und 48 gelockert, nicht aber entfernt werden müssen. Daher kann ein solcher Wechsel sehr schnell erfolgen.

Die Fräswerkzeuge weisen keine Bohrungen auf, weshalb sie sehr wirtschaftlich in variablen Längen hergestellt werden können. Die Kosten sind reduziert, weil kein Sonderrohling benötigt wird. Darüber hinaus ist die Anzahl der Arbeitsbereiche pro Fräswerkzeug und Volumeneinheit größer, was zu einer Materialeinsparung führt.

Die erfindungsgemäße Halterung der Fräswerkzeuge wirkt als geschlossener Torsionskäfig, was Vorteile hinsichtlich der Führung der Arbeitsbereiche hat. Sie können größere Kräfte aufnehmen. Dadurch sind größere Vorschübe und größere Schnittgeschwindigkeiten möglich.

Die Grenzflächen der Aufnahme für die Fräswerkzeuge haben zudem eine schwingungsdämpfende Funktion. Darüber hinaus können die Werkzeuge auch bei hohen Drehzahlen wegen des Formschlusses, insbesondere im Wege der Profilierung, auch bei hohen Drehzahlen nicht verloren gehen, selbst wenn die Schrauben versagen sollten.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein. Dies gilt insbesondere im Hinblick darauf, daß die Klemmhalterung und die Profilierung sowohl einzeln als auch in Kombination auch bei Fräsvorrichtungen mit Fräswerkzeugen mit nur einem oder zwei Arbeitsbereichen Verwendung finden können.

## Patentansprüche

1. Vorrichtung zum Fräsen eines Profils, insbesondere eines Gewindes, mit mindestens einem Fräswerkzeug (12, 14, 16) und
mindestens einem Halter (10) zum Halten des Fräswerkzeugs,
**dadurch gekennzeichnet, daß**
das Fräswerkzeug n (n ≥ 3) Arbeitsbereiche (24, 26, 28, 30) aufweist und in n verschiedenen Betriebsstellungen von dem Halter gehalten werden kann, wobei in jeder Betriebsstellung ein anderer Arbeitsbereich in einer Arbeitsstellung liegt.

2. Vorrichtung nach Anspruch 1, **dadurch gekennzeichnet, daß** die n Arbeitsbereiche (24, 26, 28, 30) in einer Projektion entlang einer Längsachse (L) des Fräswerkzeugs (12, 14, 16) in den Ecken eines n-Ecks liegen.

3. Vorrichtung nach Anspruch 1 oder 2, **dadurch gekennzeichnet, daß** das Fräswerkzeug (12, 14, 16) einstückig ist.

4. Vorrichtung nach einem der vorangehenden Ansprüche, **dadurch gekennzeichnet, daß**
das Verstellen von einer ersten in eine zweite Betriebsstellung ein Verdrehen des Fräswerkzeugs (12, 14, 16) um eine erste Achse (L) enthält,
das Verstellen von der zweiten in eine dritte Betriebsstellung ein Verdrehen des Fräswerkzeugs um eine auf der ersten Achse senkrecht stehende zweite Achse (D) enthält,
das Verstellen von der dritten in eine vierte Betriebsstellung ein Verdrehen des Fräswerkzeugs um die erste Achse enthält und
ein Verstellen von der vierten in die erste Betriebsstellung ein Verdrehen des Fräswerkzeugs um die zweite Achse enthält.

5. Vorrichtung insbesondere nach einem der vorangehenden Ansprüche, **dadurch gekennzeichnet, daß** der Halter (10) ein Klemmhalter ist.

6. Vorrichtung nach Anspruch 5, **gekennzeichnet durch** eine Schraube (46, 48) zum Erzeugen der Klemmkraft.

7. Vorrichtung nach Anspruch 6, **gekennzeichnet durch** ein zu der Schraube (46, 48) passendes geschlitztes Gewinde, das sich ansprechend auf das Einschrauben der Schraube aufweitet, um das Fräswerkzeug (12, 14, 16) einzuklemmen.

8. Vorrichtung nach einem der Ansprüche 5 bis 7, **dadurch gekennzeichnet, daß** sich der Klemmbereich über die gesamte Länge des Fräswerkzeugs (12, 14, 16) erstreckt.

9. Vorrichtung nach einem der Ansprüche 5 bis 8, **dadurch gekennzeichnet, daß** der Klemmbereich in demselben Axialabschnitt des Fräswerkzeugs (12, 14, 16) wie derjenige Arbeitsbereich (24, 26, 28, 30) liegt, der in der Arbeitsstellung ist.

10. Vorrichtung nach einem der vorangehenden Ansprüche, **dadurch gekennzeichnet, daß** der Halter (10) das Fräswerkzeug (12, 14, 16) mittels Formschlusses hält.

11. Vorrichtung nach Anspruch 10, **dadurch gekennzeichnet, daß** dem Formschlusse eine, zwei oder mehr Profilierung(en) (32, 34) dient/dienen, die sich parallel zu der Längsachse (L) des Fräswerkzeugs (12, 14, 16) erstreckt/erstrecken.

12. Fräswerkzeug einer Vorrichtung nach einem der vorangehenden Ansprüche.

## Geänderte Patentansprüche

### Geänderte Patentansprüche gemäss Regel 137(2) EPÜ.

**1.** Vorrichtung zum Fräsen eines Profils, insbesondere eines Gewindes, mit mindestens einem Fräswerkzeug (12, 14, 16) und
mindestens einem Halter (10) zum Halten des Fräswerkzeugs, wobei
das Fräswerkzeug n (n ≥ 2) Arbeitsbereiche (24, 26, 28, 30) aufweist und in n verschiedenen Betriebsstellungen von dem Halter gehalten werden kann, wobei in jeder Betriebsstellung ein anderer Arbeitsbereich in einer Arbeitsstellung liegt,
**dadurch gekennzeichnet, daß**
der Halter (10) ein Klemmhalter ist, und zwar mit
einer Schraube (46, 48) zum Erzeugen der Klemmkraft und mit
einem zu der Schraube (46, 48) passenden geschlitzten Gewinde, das sich ansprechend auf das Einschrauben der Schraube aufweitet, um das Fräswerkzeug (12, 14, 16) einzuklemmen.

**2.** Vorrichtung nach Anspruch 1, **dadurch gekennzeichnet, daß** die n Arbeitsbereiche (24, 26, 28, 30) in einer Projektion entlang einer Längsachse (L) des Fräswerkzeugs (12, 14, 16) in den Ecken eines n-Ecks liegen.

**3.** Vorrichtung nach Anspruch 1 oder 2, **dadurch gekennzeichnet, daß** das Fräswerkzeug (12, 14, 16) einstückig ist.

**4.** Vorrichtung nach einem der vorangehenden Ansprüche, **dadurch gekennzeichnet, daß**
das Verstellen von einer ersten in eine zweite Betriebsstellung ein Verdrehen des Fräswerkzeugs (12, 14, 16) um eine erste Achse (L) enthält,
das Verstellen von der zweiten in eine dritte Betriebsstellung ein Verdrehen des Fräswerkzeugs um eine auf der ersten Achse senkrecht stehende zweite Achse (D) enthält,
das Verstellen von der dritten in eine vierte Betriebsstellung ein Verdrehen des Fräswerkzeugs um die erste Achse enthält und
ein Verstellen von der vierten in die erste Betriebsstellung ein Verdrehen des Fräswerkzeugs um die zweite Achse enthält.

**5.** Vorrichtung nach einem der vorangehenden Ansprüche, **dadurch gekennzeichnet, daß** sich der Klemmbereich über die gesamte Länge des Fräswerkzeugs (12, 14, 16) erstreckt.

**6.** Vorrichtung nach einem der vorangehenden Ansprüche, **dadurch gekennzeichnet, daß** der Klemmbereich in demselben Axialabschnitt des Fräswerkzeugs (12, 14, 16) wie derjenige Arbeitsbereich (24, 26, 28, 30) liegt, der in der Arbeitsstellung ist.

**7.** Vorrichtung nach einem der vorangehenden Ansprüche, **dadurch gekennzeichnet, daß** der Halter (10) das Fräswerkzeug (12, 14, 16) mittels Formschlusses hält.

**8.** Vorrichtung nach Anspruch 7, **dadurch gekennzeichnet, daß** dem Formschlusse eine, zwei oder mehr Profilierung(en) (32, 34) dient/dienen, die sich parallel zu der Längsachse (L) des Fräswerkzeugs (12, 14, 16) erstreckt/erstrecken.

**9.** Fräswerkzeug einer Vorrichtung nach einem der vorangehenden Ansprüche.
